# EUROPÄISCHE PATENTSCHRIFT

(11) **EP 2 263 423 B1**
(45) Veröffentlichungstag und Bekanntmachung des Hinweises auf die Patenterteilung: **09.11.2011**
(21) Anmeldenummer: 09723796.0
(22) Anmeldetag: 20.03.2009
(51) Int. Cl.: H05B 41/04, H05B 41/288

(54) **SCHALTUNGSANORDNUNG ZUM ZÜNDEN VON HID-GASENTLADUNGSLAMPEN**
CIRCUIT CONFIGURATION FOR STARTING HID GAS DISCHARGE LAMPS
CIRCUIT POUR ALLUMER UNE LAMPE À DÉCHARGE GAZEUSE HID

(30) Priorität: 25.03.2008 DE 102008015645
(43) Veröffentlichungstag der Anmeldung: 22.12.2010
(73) Patentinhaber: Tridonic AG, 8755 Ennenda (CH)
(72) Erfinder: HUBER, Martin, CH-8854 Siebnen (CH); ZIMMERMANN, Michael, CH-8888 Heiligkreuz (CH); PEREIRA, Eduardo, CH-8854 Siebnen (CH); HORN, Frank, CH-8767 Elm (CH)
(74) Vertreter: Rupp, Christian
(86) Internationale Anmeldenummer: PCT/EP2009/002078
(87) Internationale Veröffentlichungsnummer: WO 2009/118134

(56) Entgegenhaltungen:
- DE-A1- 19 916 878
- US-A- 5 491 386
- US-A- 5 998 939
- US-A1- 2004 183 463
- US-B1- 6 437 515

## Beschreibung

Die vorliegende Erfindung betrifft eine Schaltungsanordnung zum Betreiben, insbesondere zum Zünden von Gasentladungslampen, insbesondere von Hochdruck-Gasentladungslampen, welche in elektronischen Vorschaltgeräten für entsprechende Gasentladungslampen zum Einsatz kommt.

Hochdruck-Gasentladungslampen unterscheiden sich von Niederdruck-Gasentladungslampen unter anderem dadurch, dass sie höhere Zündspannungen benötigen und sich ihre Farbtemperatur mit der jeweils zugeführten Lampenleistung ändert. Die letztgenannte Eigenschaft hat zur Folge, daß Hochdruck-Gasentladungslampen nur schwer oder nicht dimmbar sind. Vielmehr muß zur Erhaltung der Farbtemperatur der Hochdruck-Gasentladungslampe die der jeweiligen Lampe zugeführte Energie durch eine entsprechende Regelung konstant gehalten werden. Ein elektronisches Vorschaltgerät für Hochdruck-Gasentladungslampen muß demnach zum einen eine hohe Zündspannung erzeugen und zum anderen die Möglichkeit bieten, die der Lampe zugeführte Leistung konstant zu halten.

Bekannte elektronische Vorschaltgeräte für Hochdruck-Gasentladungslampen basieren auf einer Vollbrückenschaltung, die vier steuerbare elektronische Schalter umfaßt. Dieses Prinzip soll nachfolgend anhand Fig. 4 erläutert werden, wobei die in Fig. 4 gezeigte Schaltung beispielsweise aus der WO-A-86/04752 bekannt ist.

Wie bereits erwähnt worden ist, umfaßt diese bekannte Schaltung zum Ansteuern einer Gasentladungslampe EL, insbesondere einer Hochdruck-Gasentladungslampe, eine Vollbrücke mit vier steuerbaren Schaltern S1 - S4, die gemäß der zuvor genannten Druckschrift insbesondere durch Bipolartransistoren gebildet sind. In dem Brückenzweig dieser Vollbrücke ist ein Serienresonanzkreis bestehend aus einer Spule L1 und einem Kondensator C1 geschaltet, wobei die anzusteuernde Gasentladungslampe EL parallel zu dem Kondensator C1 angeordnet ist. Die Vollbrücke wird mit einer Gleichspannung Uo gespeist. Zu den Schaltern bzw. Transistoren S1 - S4 sind Freilaufdioden parallel geschaltet, die jedoch der Einfachheit halber in Fig. 4 nicht dargestellt sind. Zum Betreiben der Gasentladungslampe EL wird in der WO-A-86/04752 vorgeschlagen, während einer ersten Betriebsphase den Schalter S4 zu schließen und die Schalter S2 und S3 zu öffnen. Des weiteren wird während dieser ersten Betriebsphase der Schalter S1 mit einer hohen Taktfrequenz abwechselnd ein- und ausgeschaltet. Während der Einschaltdauer des Schalters S1 fließt ein Gleichstrom über den Schalter S1, die Spule bzw. Drossel L1, die Gasentladungslampe EL und den während dieser Betriebsphase stets geschlossenen Schalter S4. Durch Öffnen des Transistors S1 wird der Stromfluß unterbrochen und die in der Spule L1 durch den Stromfluß zuvor aufgebaute magnetische Energie in elektrische Energie umgesetzt, die eine Gegenspannung liefert, welche bis zum nächsten Einschaltzeitpunkt des Schalters S1 den Stromfluß durch die Gasentladungslampe EL in gleicher Richtung aufrecht erhält, wobei die in der Spule L1 gespeicherte Energie abgebaut wird. Durch erneutes Einschalten des Schalters S1 wird erneut der zuvor beschriebene Stromkreis geschlossen, so daß sich der oben erwähnte Vorgang wiederholt. Während dieser ersten Betriebsphase, in der die Schalter S2 und S3 dauerhaft geöffnet und der Schalter S4 dauerhaft geschlossen ist und der Schalter S1 hochfrequent abwechselnd geöffnet und geschlossen wird, wird die Gasentladungslampe EL stets in gleicher Richtung vom Strom durchflössen. Dies führt dazu, daß die Gasentladungslampe EL während ihres Betriebs weniger flackert und eine höhere Lichtausbeute möglich ist. Beim dauerhaften Betrieb mit der Gleichspannung Uo können sich jedoch im Elektrodenbereich der Gasentladungslampe EL Ablagerungen ansammeln, welche durch den stets in gleiche Richtung strömenden Elektronenfluß verursacht werden. Um diese Ablagerungen zu vermeiden, wird die Gasentladungslampe EL wiederholt niederfrequent umgepolt. Dies geschieht dadurch, daß während einer zweiten Betriebsphase nunmehr die Schalter bzw. Transistoren S1 und S4 dauerhaft geöffnet und der Schalter S3 dauerhaft geschlossen wird. Des weiteren wird während dieser zweiten Betriebsphase der Schalter S2 hochfrequent abwechselnd ein- und ausgeschaltet, so daß sich im Prinzip dieselbe Betriebsweise wie während der zuvor beschriebenen ersten Betriebsphase einstellt, wobei jedoch während der zweiten Betriebsphase der Stromfluß durch die Gasentladungslampe EL umgekehrt ist.

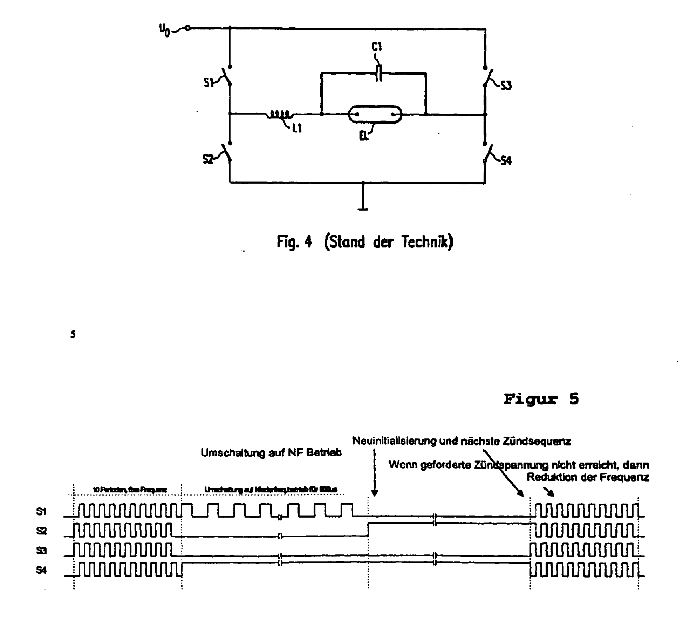

Zusammenfassend kann demnach festgestellt werden, daß die in Fig. 4 gezeigt Vollbrücke im Prinzip mit der Gleichspannung Uo betrieben wird, wobei jedoch durch das niederfrequente Umpolen zwischen den Brückendiagonalen S1 -S4 bzw. S2 - S3, d.h. durch das niederfrequente Umschalten zwischen den beiden zuvor beschriebenen ersten und zweiten Betriebsphasen, der Gasentladungslampe EL und der Drossel L1 ein niederfrequenter Wechselstrom zugeführt wird, dessen Frequenz der Umpolfrequenz entspricht. Während der beiden Betriebsphasen wird entweder der Schalter S1 oder der Schalter S2 hochfrequent abwechselnd ein- und ausgeschaltet. Das Größenverhältnis zwischen der Taktfrequenz, mit der die Schalter S1 bzw. S2 abwechselnd ein- und ausgeschaltet werden, und der deutlich niedrigeren Umpolfrequenz sollte möglichst groß gewählt werden, und kann beispielsweise 1000:1 betragen. Je größer dieses Verhältnis ist, umso kleiner kann die Drossel bzw. Spule L1 dimensioniert werden. Aufgrund des hochfrequenten Umschaltens der Schalter S1 bzw. S2 wird ein entsprechend hochfrequenter Strom erzeugt, der durch die Drossel L1 fließt. Die zur Begrenzung des Lampenstroms dienende Drossel kann daher kleiner dimensioniert werden als im Fall, wenn sie von einem niederfrequenten Strom durchflössen werden würde.

Das Zünden der in Fig. 4 gezeigten Gasentladungslampe EL erfolgt mit Hilfe des durch die Drossel L1 und den Kondensator C1 gebildeten Serienresonanzkreises, wobei zum Zünden ein Betrieb der Gasentladungslampe EL mit einer Frequenz erforderlich ist, die in der Nähe der Resonanzfrequenz des Serienresonanzkreises liegt. Ist dies der Fall, tritt an der Gasentladungslampe EL eine Spannungsüberhöhung auf, die zum Zünden der Gasentladungslampe führt.

Aus der EP-A2-0740492 ist eine Schaltungsanordnung zum Zünden und Betreiben einer Gasentladungslampe, insbesondere einer Hochdruck-Gasentladungslampe, bekannt. Zum Zünden bzw. Betreiben der Gasentladungslampe wird in dieser Druckschrift vorgeschlagen, mit Hilfe einer entsprechende Steuerschaltung die in den Brückendiagonalen angeordneten Schalter S1, S4 bzw. S2, S3 der Vollbrücke während einer ersten Betriebsphase komplementär mit einer relativ hohen Frequenz zu steuern, bis die Gasentladungslampe zündet. Anschließend schaltet die Steuerschaltung in eine zweite Betriebsphase (Nominalbetriebsphase) um, in der die Steuerschaltung die Schalter S1-S4 der Vollbrückenanordnung komplementär mit einer relativ niedrigen Frequenz ansteuert. Zudem wird gemäß dieser Druckschrift eine Regeleinrichtung verwendet, die ausgangsseitig über eine Kapazität mit der Vollbrücke derart gekoppelt ist, daß die Vollbrücke parallel zu der Kapazität angeordnet ist. Die Regeleinrichtung dient zudem zur Spannungsversorgung der Vollbrücke und regelt insbesondere die der Gasentladungslampe zugeführte Leistung. Zu diesem Zweck wird die an den Ausgangsklemmen der Regeleinrichtung anliegende Spannung sowie der augenblicklich fließende Strom gemessen, die entsprechenden Werte werden multipliziert und der gebildete Istwert als Istwert der Lampenleistung der Regeleinrichtung zugeführt. Die zuvor erwähnte Steuerschaltung ist mit der Regeleinrichtung verbunden und gibt den Sollwert der Ausgangsleistung der Regeleinrichtung vor, wobei die Steuerschaltung insbesondere während der oben beschriebenen ersten Betriebsphase (Anlaufbetriebsphase) den Sollwert anhebt, damit die Regeleinrichtung der Vollbrücke eine höhere Ausgangsleistung zuführen kann. Die Zündung der Gasentladungslampe kann durch eine Zündvorrichtung erfolgen, die mit der im Brückenzweig angeordneten Induktivität L1 gekoppelt ist. Alternativ kann die Gasentladungslampe durch Verwendung der in Fig. 4 gezeigten und der Gasentladungslampe EL parallel geschalteten Kapazität C1 gezündet werden, die zusammen mit der Induktivität L1 einen Serienresonanzkreis bildet.

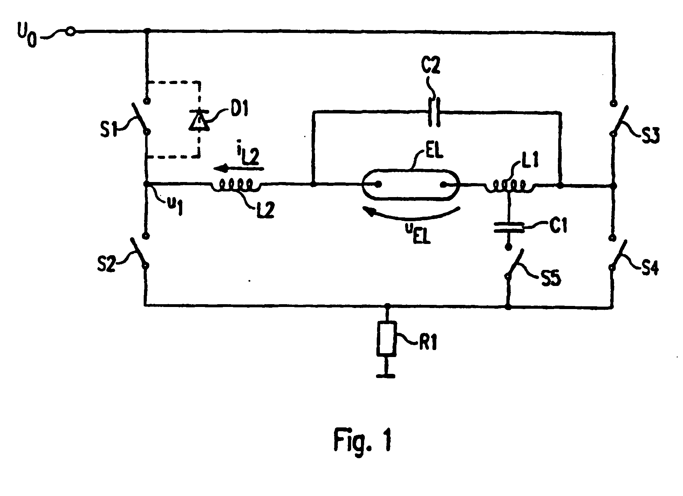

Aus der DE 199 16 879 A1 ist eine Schaltungsanordnung zum Betreiben von Hochdruck-Gasentladungslampen (HID-Lampen) bekannt, wie sie aus den Figuren 1-3 der vorliegenden Anmeldung bekannt ist. Dabei werden die Schalter S1 S2, S3 und S4 (siehe Fig. 1) jeweils so getaktet, dass abwechselnd eine der Brückendiagonalen S1 S4 bzw. S3, S2 aktiviert ist. Dabei besteht jede Brückendiagonale aus einem hochfrequent getakteten und einem niederfrequent getakteten Schalter.

Der hochfrequent getaktete Schalter wird dabei jeweils wieder eingeschaltet, wenn der in dem Brückenzweig fließende Strom IL2 einen unteren Umkehrpunkt, d.h. einen minimalen Wert, erreicht hat.

Weiterhin ist es aus der DE 199 16 878 A1 bekannt, dass der niederfrequent getaktete Schalter einer aktivierten Brückendiagonale zusätzlich zu einem geöffneten hochfrequent getakteten Schalter geöffnet wird, falls der Brückenzweigstrom nach einer vorgegebenen Zeitdauer noch nicht seinen Minimalwert erreicht hat.

US 5 491386 zeigt ein Verfahren und eine Schaltungsanordnung nach dem Präambel von Anspruch 1 bzw. 7.

Die vorliegende Erfindung bezieht sich insbesondere auf das Zünden von Hochdruck-Gasentladungslampen mittels Resonanzzündung, also der Anregung eines Resonanzkreises, der mit der Lampe gekoppelt ist, mit einer Frequenz, die im Bereich der Resonanzfrequenz oder eines Vielfachen davon (harmonische) des Resonanzkreises ist. Beim Stand der Technik wird wie gesagt mit einer Startfrequenz oberhalb der Resonanzfrequenz (oder des Vielfachen davon) begonnen und dann kontinuierlich die Frequenz der die Lampe versorgenden Spannung in Richtung der Resonanzfrequenz erniedrigt, bis das Zünden der Lampe detektiert werden kann. Dabei besteht der Nachteil, dass die sich ergebende Resonanzüberhöhung zu Spitzenwerten beispielsweise im Bereich von 2KV liegt, was zu einer hohen Belastung der verwendeten Bauteile führt, insbesondere da üblicherweise die Spannungsfestigkeit bei typischen Resonanzfrequenzen im Bereich von beispielsweise 150kHz noch niedriger ist.

Die Erfindung setzt an diesem Punkt an und schlägt eine Technik vor, um die Spannungsfestigkeitsanorderungen einer derartigen Resonanzzündung zu verringern.

Diese Aufgabe wird gelöst durch die Merkmale der unabhängigen Ansprüche. Die abhängigen Ansprüche bilden den zentralen Gedanken der Erfindung in besonders vorteilhafter Weise weiter.

Ein erster Aspekt der Erfindung bezieht sich auf ein Verfahren zum Zünden einer Gasentladungslampe, die in einem Resonanzkreis im Brückenzweig einer Vollbrückenschaltung verschaltet ist, wobei die Vollbrückenschaltung zwischen zwei und vier Schalter aufweist (zwei in Serie geschaltete Schalter können bspw. durch Kondensatoren ersetzt werden),
wobei zum Zünden zwei in Serie geschaltete Schalter (S3, S4) komplementär hochfrequent getaktet werden. Dabei werden beim Zünden die beiden in Serie geschalteten Schalter in Form von voneinander zeitlich getrennten HF-Impulspaketen angesteuert werden.

Beim Zünden wechseln sich Perioden mit HF-Impulspaketen mit Perioden ab, während der die Schalter mit niedrigerer Frequenz betrieben werden, bis in einer der Perioden mit niedrigerer Schalterfrequenz eine Zündung der Lampe bspw. anhand des Lampenstroms erfasst wird.

Die Frequenz der hochfrequenten Taktung der Schalter kann von HF-Impulspaket zu HF-Impulspaket abgesenkt wird.

Die Frequenz ist dagegen innerhalb eines HF-Impulspaketes konstant.

Es kann ggf. selektiv zwischen einem Zündbetrieb mit den HF-Impulspaketen und einer kontinuierlichen Resonanzanregung mit fallender Frequenz in Richtung der Resonanzfrequenz oder einer Harmonischen davon umgeschaltet werden.

Die Erfindung bezieht sich auch auf eine Integrierte Steuerschaltung, insbesondere einen ASIC, der zur Durchführung eines derartigen Verfahrens ausgelegt ist.

Weiterhin bezieht sich die vorliegende Erfindung auf eine Schaltungsanordnung zum Zünden einer Gasentladungslampe, aufweisend eine mit DC-Spannung versorgte Vollbrückenschaltung, in deren Brückenzweig ein Resonanzkreis geschaltet ist und die Gasentladungslampe verschaltbar ist. weiterhin ist vorgesehen eine Steuereinheit (1), die im Zündbetrieb zwei in Serie geschaltete Schalter (S3, S4) der Vollbrückenschaltung komplementär hochfrequent taktet. Dabei ist die Steuerschaltung dazu ausgelegt, beim Zünden die beiden in Serie geschalteten Schalter in Form von voneinander zeitlich getrennten HF-Impulspaketen anzusteuern.

Die Steuereinheit ist dazu ausgelegt, die Schalter der Vollbrückenschaltung derart anzusteuern, dass sich Perioden mit HF-Impulspaketen mit Perioden abwechseln, während der die Schalter mit niedrigerer Frequenz betrieben werden, bis die Steuereinheit in einer der Perioden mit niedrigerer Schalterfrequenz eine Zündung der Lampe erfasst wird.

Die Steuerschaltung kann die Frequenz der hochfrequenten Taktung der Schalter während der HF-Impulspakete von HF-Impulspaket zu HF-Impulspaket absenken.

Schliesslich ist auch vorgesehen ein Vorschaltgerät für Hochdruck-Gasentladungslampen, aufweisend eine Schaltungsanordnung der oben gebannten Art.

Die vorliegende Erfindung wird nachfolgend anhand bevorzugter Ausführungsbeispiele unter Bezugnahme auf die beigefügte Zeichnung näher beschrieben.
Fig. 1 zeigt ein Schaltbild einer aus der EP1114571B1 bekannten Schaltungsanordnung, wie sie auch bei der Erfindung Verwendung finden kann,
Fig. 2a zeigt ein erstes Diagramm, welches zeitabhängige Spannungs- und Stromverläufe in der in Fig. 1 dargestellten Schaltungsanordnung darstellt,
Fig. 2b zeigt ein zweites Diagramm, welches den zeitabhängigen Stromverlauf und Schaltzustände in der in Fig. 1 dargestellten Schaltungsanordnung entsprechend einher Weiterbildung darstellt,
Fig. 3 zeigt ein aus der EP1114571B1 elektronisches Vorschaltgerät, bei dem die in Fig. 1 gezeigte Schaltungsanordnung eingesetzt ist und das auch bei der Erfindung Verwendung finden kann,
Fig. 4 zeigt eine Schaltungsanordnung gemäß dem bekannten Stand der Technik WO-A-86/04752,
Fig. 5 zeigt eine erfindungsgemässe Ansteuerung der Schalter der Vollbrückenschaltung beim Zündbetrieb,
Fig. 6 zeigt den sich im Resonanzkreis einstellenden Spannungsverlauf bei der erfindungsgemässen Impulspaket-Ansteuerung der Schalter gemäss Figur 5,
Fig. 7 zeigt ein alternative Schaltungsanordnung, wie sie auch bei der Erfindung Verwendung finden kann, und
Fig. 8 zeigt ein weitere alternative Schaltungsanordnung, wie sie auch bei der Erfindung Verwendung finden kann.

Die in Fig. 1 gezeigte Schaltungsanordnung umfaßt steuerbare Schalter S1 - S4, die zu einer Vollbrücke verschaltet sind.

Generell ist indessen festzuhalten, dass unter dem Begriff "Vollbrücke" oder "Vollbrückenschaltung" gemäss der vorliegenden Erfindung Schaltungen umfasst sind, die zwischen zwei und vier Schalter aufweisen. Zwei in Serie geschaltete Schalter können bspw. durch Kondensatoren ersetzt werden, so dass als Mindestanforderung nur zwei in Serie geschaltete Schalter verbleiben, die hochfrequent getaktet werden.

An die Vollbrücke ist eine Gleichspannung Uo angelegt, die von einer geeigneten Gleichspannungsquelle des entsprechenden elektronischen Vorschaltgeräts, in dem die Schaltungsanordnung verwendet wird, stammt. Diese Spannung U₀ wir oft auch als Busspannung bezeichnet.Zu den Schaltern S1 - S4 sind jeweils Freilaufdioden ("Bodydioden") parallel geschaltet, wobei der Einfachheit halber in Fig. 1 lediglich die dem Schalter S1 parallel geschaltete Freilaufdiode D1 dargestellt ist. Als Schalter S1 - S4 werden vorzugsweise Feldeffekttransistoren verwendet, die die Freilaufdioden bereits enthalten. In dem Brückenzweig der in Fig. 1 gezeigten Vollbrücke ist eine anzusteuernde Gasentladungslampe EL, insbesondere eine Hochdruck-Gasentladungslampe, angeordnet. Die in Fig. 1 gezeigte Schaltungsanordnung ist insbesondere für den Betrieb von Metallhalogen-Hochdruck-Gasentladungslampen geeignet, die besonders hohe Zündspannungen benötigen. Wie bereits eingangs erwähnt worden ist, unterscheiden sich Hochdruck-Gasentladungslampen von Niederdruck-Gasentladungslampen insbesondere dadurch, daß sie höhere Zündspannungen benötigen und in ihrem kleineren Lampenkörper ein höherer Druck auftritt. Desweiteren weisen Hochdruck-Gasentladungslampen eine höhere Leuchtdichte auf, wobei sich jedoch die Farbtemperatur der jeweiligen Hochdruck-Gasentladungslampe mit der zugeführten Leistung ändert.
Elektronische vorschaltgeräte für Hochdruck-Gasentladungslampen sollten daher einerseits hohe Zündspannungen bereitstellen und andererseits eine Konstanthaltung der zugeführten Leistung ermöglichen.

Mit dem Brückenzweig der in Fig. 1 dargestellten Vollbrücke ist ein Serienresonanzkreis gekoppelt, der eine Induktivität L1 und eine Kapazität C1 umfaßt, wobei die Kapazität C1 an einen Anzapfungspunkt der Induktivität L1 angreift und über einen weiteren steuerbaren Schalter S5 parallel zu dem Schalter S4 geschaltet ist. Darüber hinaus ist eine Glättungs- oder Filterschaltung vorgesehen, die eine weitere Induktivität L2 und eine weitere Kapazität C2 aufweist, wobei diese Bauelemente wie in Fig. 1 gezeigt verschaltet sind. An die Vollbrücke ist zudem ein Widerstand R1 angeschlossen, der als Meßwiderstand (Shunt) für den Lampenstrom in Perioden dient, während denen der hochfrequent getaktete Schalter der jeweils aktivierten Brückendiagonale eingeschaltet ist.

Der zuvor erwähnte Serienresonanzkreis mit der Induktivität L1 und der Kapazität C1 dient in Kombination mit der weiteren Kapazität C2 insbesondere zum Zünden der Gasentladungslampe EL. Zu diesem Zweck wird der Serienresonanzkreis in Resonanz angeregt, d.h. eine der Resonanzfrequenz entsprechende Frequenz (oder ein vielfaches davon) der Lampe zugeführt. Die Anregung des Resonanzkreises erfolgt durch abwechselndes Schalten der Schalter S3 und S4 oder zusätzlich oder alternativ der Schalter S1 und S2. Es werden also vorzugsweise zwei in Serie geschaltete Schalter der Vollbrückenschaltung beim Zünden komplementär hochfrequent getaktet.

Dies soll nachfolgend näher erläutert werden. Zum Zünden der Gasentladungslampe EL werden zwei unmittelbar in Serie geschaltete Schalter, beispielsweise die Schalter S1 und S2, mit Hilfe einer geeigneten Steuerschaltung geöffnet und der Schalter S5, der sich in Serie mit der Kapazität C1 befindet, geschlossen. Die anderen beiden Schalter, beispielsweise die Schalter S3 und S4, der Vollbrücke werden abwechselnd geöffnet und geschlossen, wobei dies mit einer relativ hohen Frequenz (ca. 150 kHz) erfolgt. Die Schaltfrequenz wird langsam in Richtung auf die Resonanzfrequenz (oder eines Vielfachen, also einer Harmonischen der Resonanzfrequenz) des durch die Induktivität L1 und die Kapazität C1 gebildeten Serienresonanzkreises abgesenkt. Die Zündspannung der Gasentladungslampe EL wird in der Regel bereits vor Erreichen der Resonanzfrequenz erreicht. In diesem Fall wird die Schaltfrequenz für die Schalter S3 und S4 auf dieser Frequenz gehalten bis die Lampe EL zündet. Die an der rechten Hälfte von L1 abfallende Spannung wird aufgrund des durch die Induktivität L1 realisierten Spartransformatorprinzips beispielsweise im Verhältnis 1:2 auf die linke Hälfte, die mit der Gasentladungslampe EL gekoppelt ist, hochtransformiert, wobei die an der linken Hälfte der Induktivität L1 auftretende Spannung die tatsächliche Zündspannung für die Gasentladungslampe EL
bildet, die über die Kapazität C2 an die Lampe angelegt wird. Um das Zünden der Gasentladungslampe EL zu erfassen, wird die an dem Anzapfungspunkt der Induktivität L1 abfallende Spannung gemessen, welche proportional zur Zündbzw. Lampenspannung ist, da nach dem Zünden der Lampe EL diese dämpfend auf den Serienresonanzkreis einwirkt. Nach erfolgter Zündung der Gasentladungslampe EL wird der Schalter S5 für den nachfolgenden Normalbetrieb geöffnet.

Ergänzend ist zu bemerken, daß der Schalter S5 für die Funktionsfähigkeit der erfindungsgemäßen Schaltungsanordnung nicht unbedingt erforderlich ist. Vielmehr könnte der Schalter S5 auch nach erfolgter Zündung der Gasentladungslampe EL geschlossen bleiben oder grundsätzlich durch eine entsprechende Überbrückung ersetzt sein. Mit Hilfe des Schalters S5, der nach erfolgter Zündung der Gasentladungslampe EL geöffnet wird, ist jedoch ein saubererer Betrieb der Gasentladungslampe EL möglich. Des weiteren ist zu bemerken, daß die Zündspule L1 insbesondere derart ausgelegt ist, daß sie im nachfolgend noch näher erläuterten Normalbetrieb in der Sättigung arbeitet und somit den Rest der Schaltung nicht beeinflußt. Dies kann beispielsweise dadurch erreicht werden, daß als Zündspule L1 eine Spule mit einem Eisenkern verwendet wird, der im Normalbetrieb in der Sättigung betrieben wird, so daß die Spule L1 nach dem Zünden der Gasentladungslampe EL im Normalbetrieb lediglich eine vernachlässigbare Induktivität bildet. Im Normalbetrieb ist somit lediglich die ebenfalls im Brückenzweig vorgesehene Induktivität L2 strombegrenzend wirksam.

Die Anregung des Resonanzkreises erfolgt vor allem durch das abwechselnde Schalten der Schalter S3 und S4. Die Schalter S1 und S2 können während der Zündung offen gehalten werden oder aber auch komplementär zu den Schaltern S3 und S4 aktiviert werden. Im Fall der komplementären Ansteuerung wird jeweils eine Brückendiagonale aktiviert, also entweder die Schalter S1 und S4 oder aber die Schalter S2 und S3.

Nachfolgend soll der nach dem Zünden der Gasentladungslampe EL initiierte Normalbetrieb näher erläutert werden, wobei während des Normalbetriebs die erfindungsgemäße Schaltungsanordnung bzw. Vollbrücke in einem sog. Discontinuous-Modus betrieben wird. Prinzipiell wird die in Fig. 1 gezeigte vollbrücke mit den steuerbaren Schaltern S1-S4 auf an sich bekannte Art und Weise während des Normalbetriebs betrieben, d.h. die beiden Brückendiagonalen mit den Schaltern S1 und S4 bzw. S2 und S3 werden abwechselnd aktiviert und deaktiviert und somit die entsprechenden Schalter der beiden Brückendiagonalen abwechselnd bzw. komplementär zueinander ein-und ausgeschaltet, wobei zudem bei Aktivierung der Brückendiagonale mit den Schaltern S1 und S4 der Schalter S1 hochfrequent abwechselnd ein- und ausgeschaltet wird, während entsprechend bei Aktivierung der Brückendiagonale mit den Schaltern S2 und S3 der steuerbare Schalter S2 hochfrequent abwechselnd ein- und ausgeschaltet wird. D.h. die Vollbrücke wird mit einer relativ niedrigen Frequenz, die insbesondere im Bereich 80 - 400 Hz liegen kann, umgepolt, während der Schalter S1 oder S2 der jeweils aktivierten Brückendiagonale zudem hochfrequent,
beispielsweise mit einer Frequenz von ca. 90 kHz, abwechselnd ein- und ausgeschaltet wird. Dieses hochfrequente Ein- und Ausschalten der Schalter S1 oder S2 erfolgt mit Hilfe eines hochfrequenten pulsweitenmodulierten Steuersignals einer entsprechenden Steuerschaltung, welches mit Hilfe der aus den Bauelementen L2 und C2 bestehenden Filter- oder Glättungsschaltung gesiebt wird, so daß an der Gasentladungslampe EL lediglich der lineare Mittelwert des über den Brückenzweig fließenden Zweigstroms iL2 anliegt. Mit Hilfe des pulsweitenmodulierten Steuersignals kann die der Vollbrücke zugeführte Leistung konstant gehalten werden, was - wie eingangs erwähnt worden ist - insbesondere für den

Betrieb von Hochdruck- Gasentladungslampen wichtig ist. Der niederfrequente Anteil des der Gasentladungslampe E1 zugeführten Stroms wird durch Umschalten bzw. Umpolen der beiden Brückendiagonalen, d.h. durch Umschalten von S1 und S4 auf S2 und S3, erzeugt. Über den rechten Brückenzweig mit den Schaltern S3 und S4 wird in diesem Fall die Lampe EL niederfrequent auf die Versorgungsspannung Uo oder auf Masse gelegt, so daß an den Anschlußklemmen der Lampe EL im wesentlichen lediglich der niederfrequente Anteil anliegt.

Gemäß dem zuvor erwähnten niederfrequenten Discontinuous-Modus wird der steuerbare Schalter S1 bzw. S2 der jeweils aktivierten Brückendiagonale immer dann geschlossen, wenn der über die Induktivität L2 fließende Zweigstrom iL2 sein Minimum erreicht hat. Mit "Minimum" wird dabei der untere Umkehrpunkt des Stroms iL2 verstanden, wobei dieses Minimum durchaus auch im leicht negativen Stromwertbereich liegen kann.

Zur Betrachtung des Stromverlaufs soll nachfolgend davon ausgegangen werden, daß zunächst die Brückendiagonale mit 30 den Schaltern S2 und S3 aktiviert ist, während die Brückendiagonale mit den Schaltern S1 und S4 deaktiviert ist. D.h. die Schalter S2 und S3 sind geschlossen, während die Schalter S1 und S4 geöffnet sind. Zum Zeitpunkt des Schließens der Schalter S2 und S3 beginnt durch die Induktivität L2 ein Strom iL2 zu fließen, der gemäß einer Exponentialfunktion ansteigt, wobei im hier interessierenden Bereich ein quasi-linearer Anstieg des Stroms A2 zu erkennen ist, so daß nachfolgend der Einfachheit halber von einem linearen Anstieg bzw. Abfall des Stroms iI2 gesprochen wird. Durch Öffnen des Schalters S2 wird dieser Strom iL2 unterbrochen, wobei - wie bereits erwähnt worden ist - der Schalter S2 insbesondere hochfrequent und unabhängig vom Schaltzustand des Schalters S3 abwechselnd geöffnet und geschlossen wird. Das Öffnen des Schalters S2 hat zur Folge, daß der Strom iL2 zwar vorerst über die Freilaufdioden D1 des geöffneten Schalters S1 in die gleiche Richtung weiter fließt, aber kontinuierlich abnimmt und sogar schließlich einen negativen Wert erreichen kann.

Dies ist insbesondere solange der Fall bis die Elektronen aus der Sperrschicht der Freilaufdiode D1 ausgeräumt worden sind. Das Erreichen dieses unteren Umkehrpunktes des Strom i12 wird überwacht und der Schalter S2 nach Erkennen dieses unteren Umkehrpunktes wieder geschlossen, so daß der Strom wieder ansteigt. D.h. daß hochfrequente Einschalten des Schalters S2 erfolgt immer dann, wenn der untere Umkehrpunkt des Stroms iL2 erreicht worden ist. Das Öffnen des Schalters S2 kann im Prinzip beliebig gewählt werden, wobei der Zeitpunkt des Öffnens des Schalters insbesondere entscheidend für die Leistungszufuhr der Gasentladungslampe EL ist, so daß durch geeignetes Einstellen des öffnungszeitpunkts die der Lampe zugeführte Leistung geregelt bzw. konstant gehalten werden kann. Als Schaltkriterium kann hierfür beispielsweise die Zeit oder der Maximalwert des Zweigstroms iL2 herangezogen werden. Durch die Maßnahme, daß der jeweils hochfrequent abwechselnd ein- und ausgeschaltete Schalter S1 bzw. S2 jeweils im unteren Umkehrpunkt des Stroms iL2, d.h. in der Nähe des Stromwerts Null, wieder eingeschaltet wird, wird der jeweilige Feldeffekttransistor S1 bzw. S2 geschont, d.h. vor Zerstörung geschützt, und es können Feldeffekttransistoren als Schalter S1 bzw. S2 verwendet werden, die verhältnismäßig lange Ausräumzeiten für die entsprechende Freilaufdiode aufweisen. Dies soll nachfolgend näher erläutert werden.

Bevor der Schalter S2 geschlossen wird, liegt über ihm eine Spannung an, die im vorliegenden Fall ca. 400 Volt beträgt. Wird der Schalter S2 geschlossen, bericht diese Spannung zusammen, d.h. sie fällt sehr rasch von 400 Volt auf 0 Volt ab. Die besondere Eigenschaft eines Feldeffekttransistors ist es jedoch, daß der Strom bei Aktivierung des entsprechenden Feldeffekttransistors bereits zu fließen beginnt, ehe die entsprechende Spannung auf 0 Volt abgefallen ist. In diesem kurzen Zeitabschnitt zwischen Anstieg des für den Feldeffekttransistor fließenden Stroms und dem Erreichen der Spannung 0 Volt wird durch das
Produkt des Stroms und der Spannung eine dem jeweiligen Feldeffekttransistor zugeführte Leistung gebildet, die den Feldeffekttransistor zerstören kann. Daher ist es vorteilhaft, den Feldeffekttransistor bei einem geringstmöglichen Stromfluß, insbesondere in der Nähe des Stromwerts Null, zu schalten.

Des weiteren ist zu beachten, daß der über die Induktivität L2 fließende Strom iL2 über die Freilaufdiode von D1 fließt, wenn der Schalter S1 offen ist und auch der Schalter S2 noch offen ist. Wird der Schalter S2 geschlossen und der Schalter S1 geöffnet, dauert es eine bestimmte Zeitspanne, bis die Elektronen aus der Sperrschicht der Freilaufdiode D1 ausgeräumt werden konnten. Während dieser Zeit ist der Feldeffekttransistor S1 praktisch in einem leitenden Zustand. Das bedeutet, daß der Feldeffekttransistor S2 während einer relativ kurzen Zeitspanne bis zum Ausräumen der Sperrschicht der Freilaufdiode D1, die dem Feldeffekttransistor S1 zugeordnet ist, an der vollen Betriebsspannung Uo, die ca. 400 Volt beträgt, anliegt, wodurch es ebenfalls zu der zuvor beschriebenen Überbelastung und ggf. sogar Zerstörung des Feldeffekttransistors S2 kommen kann. Aufgrund der zuvor vorgeschlagenen Vorgehensweise, nämlich dem Einschalten des Schalters S2 immer dann, wenn der über die Induktivität L2 fließende Strom iL2sein Minimum erreicht hat, ist der zuvor anhand der Ausräumzeit des Schalters bzw. Feldeffekttransistors S1 beschriebene Effekt nahezu unbeachtlich, so daß für die Schalter S1-S4 auch Feldeffekttransistoren verwendet werden können, die relativ lange Ausräumzeiten für die damit verbundenen Freilaufdioden aufweisen. Es gibt zwar bereits Schaltelemente mit sehr kurzen Ausräumzeiten, wie z. B. den sog. IGBT (Insulated Gate Bipolar Transistor), wobei diese Bauelemente jedoch sehr teuer sind. Mit Hilfe der vorliegenden Erfindung kann somit auf die Verwendung derartig teurer Bauelemente verzichtet werden.

Für die zuvor beschriebene vorgehensweise ist erforderlich, daß der augenblickliche Wert des Stroms iL2 sowie der Zeitpunkt des Erreichens seines Umkehrpunkts bekannt ist. Der augenblickliche Wert des Stroms iL2 kann beispielsweise durch Messen der an dem Widerstand R1 abfallenden Spannung bestimmt werden. Der untere Umkehrpunkt des Stroms iL2 wird vorzugsweise durch eine transformatorisch an der Spule L2 abgegriffene Spannung bestimmt. Zu diesem Zweck kann eine (in Fig. 1 nicht dargestellte) Wicklung oder Spule transformatorisch mit der Spule L2 gekoppelt werden, die zu einer Differenzierung des über die Spule L2 fließenden Stroms iL2 führt und somit eine Aussage über den Umkehrpunkt des Stroms iL2 zuläßt.

Der untere Umkehrpunkt kann auch durch andere Rückführsignale, bspw. der Mittenpunktspannung am Verbindungspunkt der Schalter S1 und S2 indirekt erfasst werden. Von Bedeutung ist allein, dass der Zeitpunkt des unteren Minimums des Brückenzweigstroms erfassbar ist. Quantative Aussagen zu diesem Strom sind dagegen für die Bestimmung des Einschaltzeitpunkts des hochfrequent getakteten Schalters nicht erforderlich.

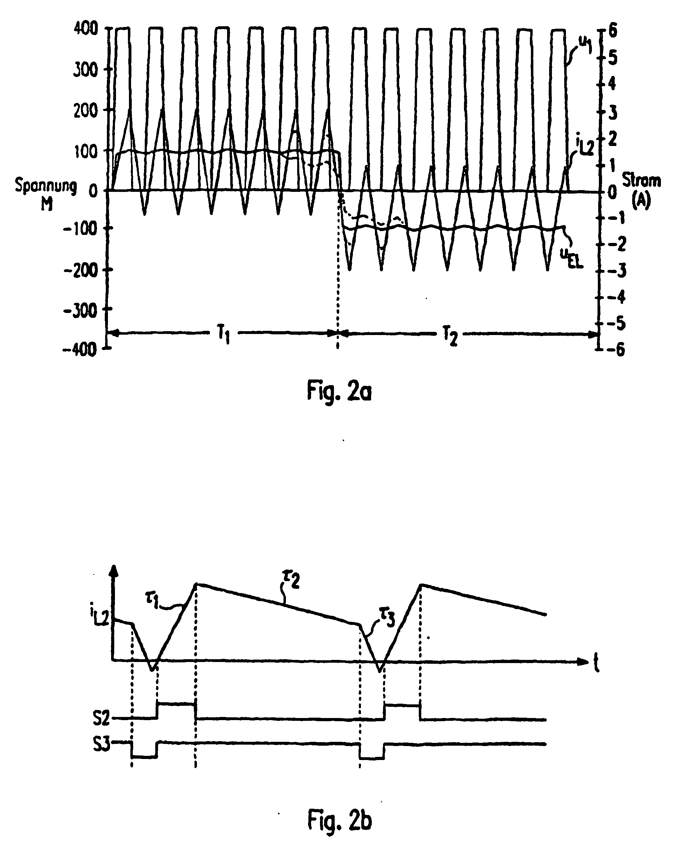

Der Normalbetrieb der in Fig. 1 gezeigten Schaltungsanordnung soll nachfolgend anhand des in Fig. 2 dargestellten Diagramms erläutert werden, wobei in Fig. 2 zeitabhängig der Verlauf der am Knotenpunkt zwischen den Schaltern S1 und S2 anliegenden Spannung, der Lampenspannung uEL und des über die Spule L2 fließenden Stroms iL2 dargestellt ist. Insbesondere ist in Fig. 2 der Fall dargestellt, daß während einer ersten Zeitspanne T1 der in Fig. 1 gezeigten Schaltungsanordnung die Brückendiagonale mit den Schaltern S2 und S3 aktiviert ist, wohingegen während einer anschließenden Zeitspanne T2 die Brückendiagonale mit den Schaltern S1 und S4 aktiviert ist.

D.h. während der Zeitspanne T1 ist der Schalter S3 dauerhaft geschlossen, und die Schalter S1 und S4 sind dauerhaft geöffnet. Des weiteren wird während dieser Zeitspanne T1 der Schalter S2 hochfrequent abwechselnd ein-und ausgeschaltet. Aus Fig. 2 ist insbesondere ersichtlich, daß der Schalter S2 stets geschlossen wird, wenn der über die Spule L2 fließende Strom iI2 seinen unteren Umkehrpunkt, d.h. seinen minimalen Wert, erreicht hat, so daß sich der impulsartige Verlauf der Spannung u, ergibt. Die Steilheit der Flanken des Stroms iL2 ist durch die Induktivität der Spule L2 bestimmt. Durch Verändern des Spitzenwert des Stroms iI2, d.h. des Zeitpunkts des Öffnens des Schalters S2, kann der Strommittelwert des Stroms iL2 verändert und somit die der Lampe EL zugeführte Leistung und deren Farbtemperatur geregelt bzw. konstant gehalten werden. Der hochfrequente Verlauf des Stroms iL2 wird durch die Bauelemente L2 und C2 geglättet, so daß sich der in Fig. 2 gezeigte geglättete Verlauf der an die Gasentladungslampe EL angelegten Spannung uEL ergibt.

Nach Ablauf der Zeitspanne T, werden die Schalter S2 und S3 dauerhaft geöffnet, und der Schalter S4 wird dauerhaft eingeschaltet. Analog zum Schalter S2 während der Zeitspanne T1 wird nunmehr der Schalter S1 hochfrequent abwechselnd ein- und ausgeschaltet, so daß sich der in Fig. 2 gezeigte Verlauf der Spannungen Uj und uEL sowie des Stroms iL2 ergibt. wie bereits erwähnt worden ist, wird mit Hilfe einer Steuerschaltung wiederholt zwischen den Betriebsphasen während der Zeitspannen T1 und T2 umgeschaltet, wobei diese Umpolfrequenz insbesondere im Bereich 80 - 400 Hz liegen kann, während die hochfrequente Taktfrequenz des Schalters S2 (während der Zeitspanne TA bzw. des Schalters S1 (während der Zeitspanne T2) im Bereich um 90 kHz liegen kann.

Durch das niederfrequente Umschalten bzw. Umpolen zwischen den Brückendiagonalen S1 - S4 und S2 - S3 entsteht zwangsläufig ein Brummen, welches aufgrund seiner niedrigen Frequenz an sich relativ leise und nicht störend ist. Durch die steilen Flanken am Umschaltzeitpunkt zwischen den Zeitspannen T1 und T2 entstehen jedoch Oberwellen, die sich störend auswirken. Aus diesem Grunde ist die Steuerschaltung, welche die Schalter S1 - S4 ansteuert, vorteilhafter Weise derart auszugestalten, daß sie die Stromspitzen des Stroms iL2 vor und nach dem Umschalten zwischen den Betriebsphasen TA und T2 reduziert. Dies kann beispielsweise durch eine spezielle Software oder durch eine spezielle Anpassung der Hardware der Steuerschaltung 5 geschehen, die die letzten Stromspitzen während der Zeitspanne T1 sowie die ersten Stromspitzen während der Zeitspanne T2 reduziert, um auf diese Weise die Flanken beim Umschalten zwischen den Betriebsphasen T1 und T2 abzuflachen. In diesem Fall ergibt sich der in Fig. 2 gestrichelt dargestellte Verlauf des Stroms iI2 bzw. der Lampenspannung uEL. Aus dieser gestrichelten Darstellung ist ersichtlich, daß vor und nach dem Umschaltzeitpunkt die Stromspitzen geringfügig gegenüber dem ursprünglichen Verlauf reduziert sind und somit ein etwas weicherer Übergang der Lampenspannung uEL erzielt wird.

Bei der eben beschriebenen Steuerung läuft nach dem Öffnen des hochfrequent geschalteten Schalters der Strom weiter über die Freilaufdiode und nimmt dabei relative langsam ab, wenn der zweite Schalter der gerade aktivierten Brückendiagonalen weiterhin geschlossen bleibt. Dies führt zu einem kleineren Stromspitzenwert und dementsprechend
auch zu einer kleineren Verlustleistung. Allerdings kann es vorkommen, daß zu einem Zeitpunkt, zu dem die Elektronen aus den Sperrschichten der Freilaufdioden ausgeräumt worden sind und somit der untere Umkehrpunkt des Stromes iL2 erreicht worden ist, dieser noch nicht ausreichend abgefallen ist und somit die Schalter beim Schließen immer noch einer hohen Belastung ausgesetzt sind. Um diese Belastungen auszuschließen, können in einer Weiterbildung die Schalter entsprechend dem Diagramm in Fig. 2b gesteuert werden.

Dieses Diagramm zeigt den Stromverlauf iL2 und den Zustand des zweiten und des dritten Schalters 2, 3 während der Zeitspanne T. Die beiden anderen Schalter sind in diesem Zeitraum T, geöffnet. Während einer ersten Phase x sind beide Schalter geschlossen und der Strom iL2 steigt kontinuierlich an. Wie bei der eben beschriebenen Steuerung ist während einer zweiten Phase x2, deren Beginn durch das Erreichen eines Maximalwerts von iL2 oder durch eine vorgegebene Dauer von x bestimmt sein kann, der zweite Schalter S2 geöffnet und iI2 nimmt langsam ab. Zusätzlich wird nun allerdings ab einem vorgegebenen Zeitpunkt nach dem Öffnen des zweiten Schalters S2 in einer dritten Phase x3 auch der dritte Schalter S3 geöffnet. Der Strom fließt nun über die beiden Freilaufdioden des ersten und des vierten Schalters und nimmt nun stärker ab als während der zweiten Phase x2. Damit kann sichergestellt werden, daß iL2 auch tatsächlich einen negativen Wert erreicht, bevor die Sperrschichten der Freilaufdioden ausgeräumt sind. Erreicht iL2 den unteren Umkehrpunkt, werden beide Schalter wieder geschlossen und die Steuerung befindet sich wieder im Zustand der ersten Phase x1. Das Öffnen des dritten Schalters S3 - also die dritte Phase x3 - entfällt allerdings, wenn der Strom iL2 vorher schon auf Null abgesunken ist, da in diesem Fall keine hohen Belastungen beim Öffnen Schalter auftreten. Stattdessen wird sofort mit der ersten Phase x, fortgefahren und der zweite Schalter S2 wieder geöffnet. Das niederfrequente Umschalten zwischen den beiden Brückendiagonalen erfolgt analog zu dem vorherigen Ausführungsbeispiel, wobei auch hier vorteilhaft die Stromspitzen des Stroms iL2 vor und nach dem Umschalten zwischen den Betriebsphasen T1 und T2 reduziert werden können.

Es ist eine bekannte Eigenschaft von Hochdruck-Gasentladungslampen, daß diese bis zur vollständigen Erwärmung ein relativ schlecht kontrollierbares und instabiles Verhalten aufweisen. Die vollständige Erwärmung tritt dabei etwa nach 1-2 Minuten ein. In der Aufwärmphase kann die Spannung über der Lampe geringer als im Normalbetrieb sein. Würde man in der Aufwärmphase das vorschaltgerät wie im zuvor beschriebenen Normalbetrieb betreiben, so würde die verringerte Lampenspannung zur Folge haben, daß ein Strom ixi mit entsprechend geringer Steilheit diL2/dt über die Induktivität L2 fließt, so daß ggf. der Umkehrpunkt von iL2 nicht zuverlässig detektiert werden kann. Daher ist es vorteilhaft, während der Aufwärmphase, d.h. nach dem Zünden und vor dem eigentlichen Normalbetrieb, auch die Schalter S3 und S4 analog zu den Schaltern S1 und S2 hochfrequent zu takten, wobei niederfrequent zwischen den Brückendiagonalen S1 - S4 und S2 S3 umgeschaltet wird, d.h. es wird niederfrequent zwischen zwei Zuständen umgeschaltet, wobei in dem ersten Zustand die Schalter S1 und S4 hochfrequent getaktet und die Schalter S2 und S3 geöffnet sind, während im zweiten Zustand die Schalter S2 und S3 hochfrequent getaktet und die Schalter S1 und S4 geöffnet sind. Durch diese Maßnahme wird erreicht, daß auch über die Freilaufdioden der Schalter S4 und S1 ein Strom über die Spule L2 fließt, wodurch in der transformatorisch mit dieser Spule L2 gekoppelten und in Fig. 1 nicht gezeigten Wicklung, die zur Erfassung des Umkehrpunkts des Stromes iL2 vorgesehen ist, eine höhere Spannung erzeugt wird, so daß eine sichere Erfassung oder Überwachung des Stroms iL2 möglich ist. Insbesondere kann der Umschaltzeitpunkt exakt überwacht werden. Der Wechsel von der Aufwärmphase in den Normalbetrieb erfolgt nach Erreichen der Betriebstemperatur der Lampe beispielsweise nach Überschreiten einer Schwelle (ca. 45V) durch die Lampenspannung, wobei bevorzugt bis zum tatsächlichen Umschalten noch eine bestimmte Zeitspanne zugewartet wird.

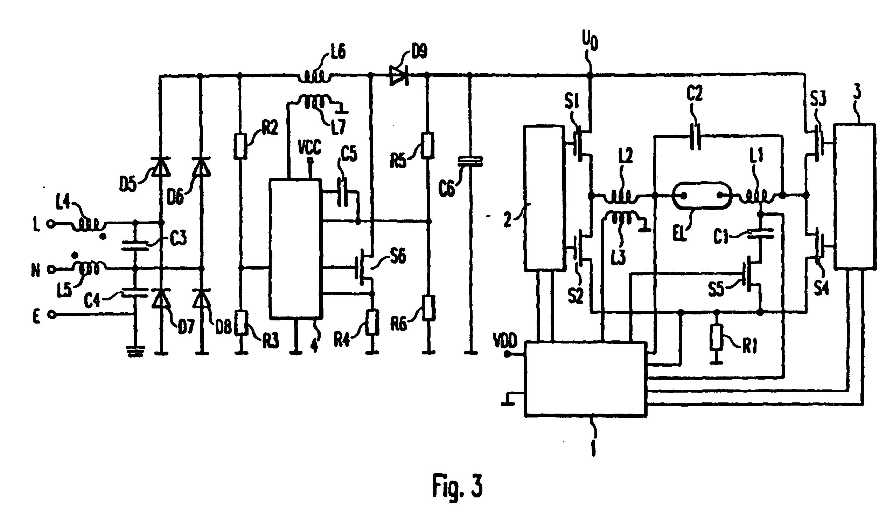

Fig. 3 zeigt den Einsatz der in Fig. 1 dargestellten Schaltungsanordnung gemäß der vorliegenden Erfindung in einem elektronischen Vorschaltgerät zum Betreiben von Gasentladungslampen, insbesondere von Hochdruck-Gasentladungslampen.

Eingangsseitig weist das elektronische Vorschaltgerät ein Funk-Entstörfilter mit einem Symmetriertransformator L4, L5 sowie Kondensatoren C3 und C4 auf, die an einen stromführenden Leiter L, einen Nullleiter und einen Erdleiter eines Versorgungsspannungsnetzes angeschlossen sind. Mit dem Funk-Entstörfilter ist ein 5 Gleichrichter verbunden, der Dioden D5 - D8 umfaßt. An diesen Gleichrichter schließt sich eine Schaltung an, die als Hochsetzsteller fungiert und widerstände R2 - R6, Kondensatoren C5 und C6, eine Diode D9 einen Transformator L6, L7, einen Feldeffekttransistor S6 sowie eine von einer Versorgungsspannung VCC versorgte integrierte Steuerschaltung 4 - bspw. ein ASIC oder µC - aufweist, welche insbesondere den Feldeffekttransistor S6, der als ein Schalter dient, mit Hilfe eines pulsweitenmodulierten Signals abhängig von der am Widerstand R3 abgegriffenen Spannung ansteuert. Auf diese Weise wird erreicht, daß die Zeiten, in denen der Transistor S6 leitend ist, während einer Netzhalbwelle so gesteuert werden, daß die Hüllkurve des aufgenommenen Stroms im wesentlichen sinusförmig ist. Diese Ausgangsspannung wird mit Hilfe der Diode D9 gleichgerichtet und mit Hilfe des Kondensators C6 gesiebt, so daß die bereits anhand Fig. 1 erläuterte Versorgungsgleichspannung Uo für die zum Betreiben der Gasentladungslampe EL vorgesehene Schaltungsanordnung bereitgestellt wird. Ausgangsseitig umfaßt das in Fig. 3 gezeigte elektronische Vorschaltgerät die in Fig. 1 gezeigte Schaltungsanordnung, wobei die sich entsprechenden Bauteile mit identischen Bezugszeichen versehen sind, so daß auf eine Wiederholung der Beschreibung dieser Bauteile verzichtet werden kann. Ergänzend ist jedoch zu bemerken, daß in Fig. 3 auch die bereits zuvor erwähnte Wicklung L3 dargestellt ist, die mit der im Brückenzweig der Vollbrücke befindlichen Induktivität L2 transformatorisch gekoppelt ist und zur Detektierung des Umkehrpunkts des Stroms iL2(vergl. Fig. 1) dient. Desweiteren ist in Fig. 3 die zentrale Steuerschaltung 1 dargestellt, welche von einer Versorgungsspannung VDD gespeist wird und einerseits mit Hilfe der Spule L3 den Umkehrpunkt des Stroms iL2 sowie mit Hilfe der am Widerstand R1 abgegriffenen Spannung die augenblickliche Höhe der Stroms iL2 erfaßt. Des weiteren überwacht diese Steuerschaltung 1, die insbesondere als anwenderspezifische integrierte Schaltung Application Specific Integrated Circuit, ASIC) ausgestaltet sein kann, die am Anzapfungspunkt der Spule L1 des Serienresonanzkreises anliegende Spannung, mit deren Hilfe das Zünden der Gasentladungslampe EL erfaßt werden kann. Die Ausgänge der Steuerschaltung 1 sind mit Brückentreibern 2, 3 gekoppelt, die jeweils zur Ansteuerung der Feldeffekttransistoren S1 und S2 bzw. S3 und S4 dienen. Der ebenfalls als Schalter dienende Feldeffekttransistor S5, welcher in Serie mit der Resonanzkreiskapazität C1 geschaltet ist, wird direkt von der Steuerschaltung 1 angesteuert.

Gemäß der Erfindung wird zum Zünden kein kontinuierlicher Resonanzbetrieb (mit sich langsam nach unten verschiebender Frequenz) verwendet, vielmehr werden wie in Fig. 5 ersichtlich, die Schalter S3, S4 bzw. auch komplementär die Schalter S1, S2 hochfrequent komplementär in Form von Impulspaketen (von beispielsweise 10 Perioden mit fixer Frequenz) betrieben, auf die Phasen folgen, bei denen der Schalter S1 niederfrequent betrieben wird. In diesen Phasen der niederfrequenten Taktung des Schalters S1 kann beispielsweise über die Lampenstromerfassung eine Zündung erkannt werden. Falls keine Zündung in diesem Zeitraum der niederfrequenten Taktung des Schalters S1 erfasst wird, folgt ein neues Impulspaket, diesmal allerdings mit verringerter Frequenz.

Bevor ein neues Impulspaket gestartet wird, kann eine Initialisierung der Schaltung durchgeführt werden. Diese Initialisierung entspricht einem Rücksetzen der Schaltung. Dabei werden die beiden Schalter S2 und S4 aktiviert und somit die beiden Mittelpunkte der Halbbrücken S1, S2 bzw. S3, S4 auf ein niedriges Potential gezogen. Auf diese Weise kann eine potentialmässig definierte Ausgangssituation für den nächsten Zündversuch durch Anlegen eines erneuten Impulspaketes geschaffen werden.

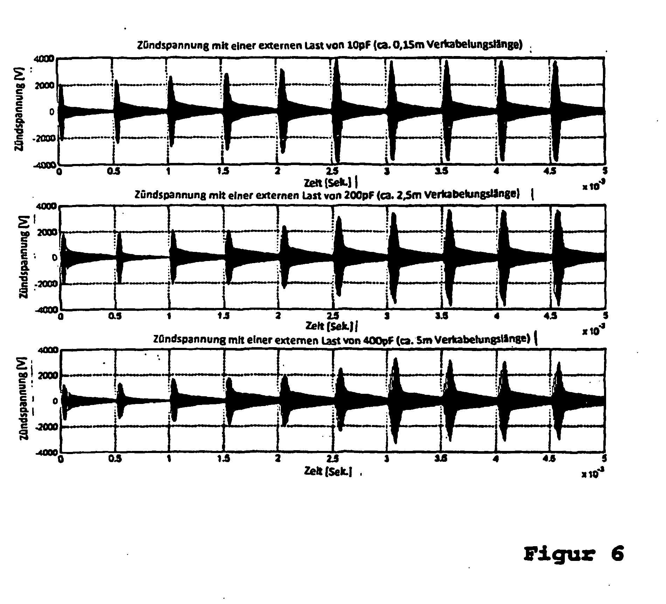

Diese Abfolge aus hochfrequenten Impulspaketen und niederfrequenter Taktung erfolgt solange, bis mit nach und nach niedriger fester Frequenz der HF-Impulspakete eine Zündung der Lampe erfasst werden kann. Die Erfindung sieht also eine gepulste Resonanzzündung vor. Der Vorteil dabei ist, dass sich bei dieser gepulsten Resonanzzündung ein Spannungsfrequenzspektrum ergibt, das im Bereich der Resonanzfrequenz weiterhin einen Spannungspeak zeigt, der allerdings beispielsweise um einen Faktor 10 niedriger liegt. Grund dafür ist, dass sich durch die gepulste Resonanzzündung ein Spannungsverlauf wie in Figur 6 ersichtlich ergibt. Figur 6 zeigt auf einer zeitachse die sich einstellende Zündspannung mit unterschiedlichen kapazitiven Lasten, die also unterschiedlichen Leitungslängen der Zuleitungskabel entsprechen.

Bei der oberen Darstellung wird von einer externen Last von 10pF, entsprechend etwa einer Verkabelungslänge von 0,15m ausgegangen. Bei der mittleren Darstellung wird von einer kapazitiven externen Last von 200pF, entsprechend etwa 2,5m Verkabelurigslänge. Bei der unteren Darstellung schließlich wird von einer externen Last von 400pF, entsprechend 5m Zuleitungslänge ausgegangen.

Wie bereits ausgeführt, wird in aufeinanderfolgenden HF-Impulspaketen die Frequenz langsam in Richtung der Resonanzfrequenz (oder eines Vielfachen davon) abgesenkt. Dementsprechend fällt die Resonanzüberhöhung zu Beginn eines jeden Impulspaketes nach und nach höher aus, bis die Zündung der Lampe erfasst werden kann.

Wie aus Figur 6 ersichtlich klingt bei der Anregung durch ein Impulspaket (im Gegensatz zur kontinuierlichen Resonanzanregung) die Zündspannung nach und nach ab, bevor wiederum der folgende HF-Impulszug angeregt wird. Durch den Spannungsverlauf wie in Figur 6 dargestellt, ergibt sich wie gesagt ein Spannungsfrequenzspektrum mit wesentlich niedrigeren Peak im Bereich der Resonanzfrequenz, da das Spektrum durch die zeitlich abklingende Zündspannung (siehe Figur 6) wesentlich breiter verteilt ist.

Da der maximale Spannungspeak (bei frequenzmäßiger Betrachtung) niedriger liegt, bestehen niedrigere Anforderungen an die Spannungsfestigkeit der Zuleitungen, des Lampensockels etc.

Gemäß der Erfindung kann vorgesehen sein, dass die Steuerschaltung 1, die den Schalter S1-S4 auch im Zündbetrieb ansteuert, zwischen der bekannten kontinuierlichen Resonanzzündung und der oben erläuterten gepulsten Resonanzzündung umschaltbar sein kann. Diese Umschaltung kann beispielsweise durch einen über eine Busleitung und eine Busschnittstelle des Betriebsgeräts eingehenden Befehl ausgelöst werden.

Wie aus Figur 6 ersichtlich, sind die Impulspakete und deren zeitlicher Abstand so gewählt, dass es zu einem Abklingen der Zündspannung kommt, bevor der nächstfolgende HF-Impulszug angeregt wird.

Wie aus Figur 5 ersichtlich, werden die Schalter S1-S4 derart angeregt, dass gleichzeitig die Schalter S1 und S4 und dazu komplementär die Schalter S2 und S3 getaktet werden.

Alternativ dazu kann während des Zündens auch die Halbbrücke S1 S2 offen gehalten werden. In diesem Fall werden dann nur die in Serie geschalteten Schalter S3 , S4 komplementär hochfrequent geschaltet.

Da wie in Figur 5 und 6 gezeigt, die HF-Impulspakete von verhältnismäßig kurzer Zeitdauer sind, kann in Kauf genommen werden, dass die Induktivität L2 am Ende eines Impulspaketes in die Sättigung getrieben ist. Dementsprechend kann die Spule L2 im Vergleich zum Stand der Technik kostengünstiger und kleiner dimensioniert werden.

Im Übrigen wird bei der vorliegenden Erfindung weiterhin der Vorteil der Resonanzzündung beibehalten, dass auch kapazitive Lasten, beispielsweise hervorgerufen durch lange Zuleitungen bewältigt werden können (siehe Figur 6). Diese kapazitiven Lasten, beispielsweise hervorgerufen durch lange Zuleitungen stellen dagegen bei einer Überlagerungszündung ein Problem dar.

Weiterhin wird der Vorteil der Resonanzzündung beibehalten, dass kein zusätzlicher Schalter (im Vergleich zur Überlagerungszündung) für das Zünden vorgesehen sein muss, vielmehr werden die vier Schalter der Vollbrücke (oder ggf. auch nur zwei aktive davon) für den zündvorgang verwendet.

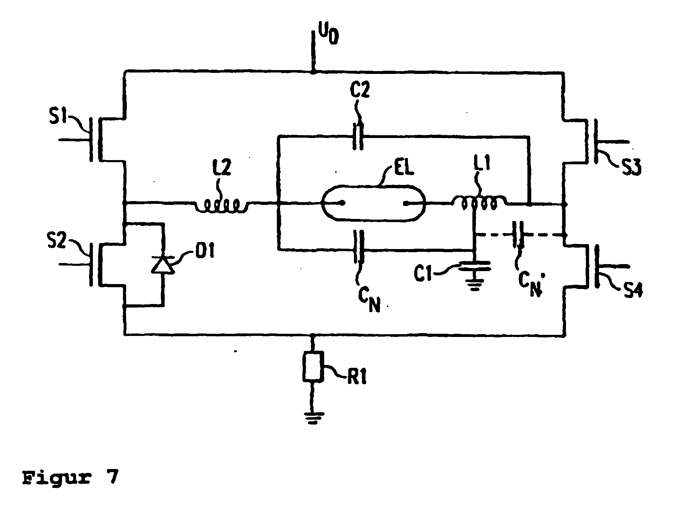

Wie durch einen Vergleich der Figuren 1 und 7 so verdeutlicht wird, ist der Schalter S5 weggelassen und sozusagen dauerhaft überbrückt. Der Kondensator C1 des Serienresonanzkreises bestehend aus dem Spartransformator L1 und eben diesem Kondensator C1 ist mit einem Ende weiterhin mit Masse verbunden.

Dafür ist ein erfindungsgemäss ein Zusatzkondensator CN vorgesehen, der einerseits mit dem Verbindungspunkt zwischen der Induktivität L1 und der Kapazität C1 des Serienresonanzkreises verbunden ist. Andererseits ist der Zusatzkondensator CN an dem Verbindungspunkt zwischen den Schaltern S1 und S2 bzw. dem Verbindungspunkt zwischen der Induktivität L2 sowie der Kapazität C2 der Glättungs- bzw. Filterschaltung vorgesehen (die im Übrigen einen eigenen Serienresonanzkreis bildet).

Alternativ kann wie in Fig. 7 strichliniert dargestellt die Zusatzkapazität CN auch zwischen einem Verbindungspunkt zwischen der Induktivität L1 und der Kapazität C1 des Serienresonanzkreises und einen Verbindungspunkt des dritten und vierten Schalters S3 bzw. S4 verbunden sein. Diese Zusatzkapazität CN', die also alternativ oder zusätzlich der bereits erläuterten Zusatzkapazität CN vorgesehen sein kann, ist somit parallel zu dem in Fig. 7 rechten Zweig des Spartransformators L1 geschaltet. Die bereits erläuterte Zusatzkapazität CN ist dagegen parallel zu der Gasentladungslampe EL und dem linken Zweig des Spartransformators L1 geschaltet, indem die Zündspannung transformiert wird.

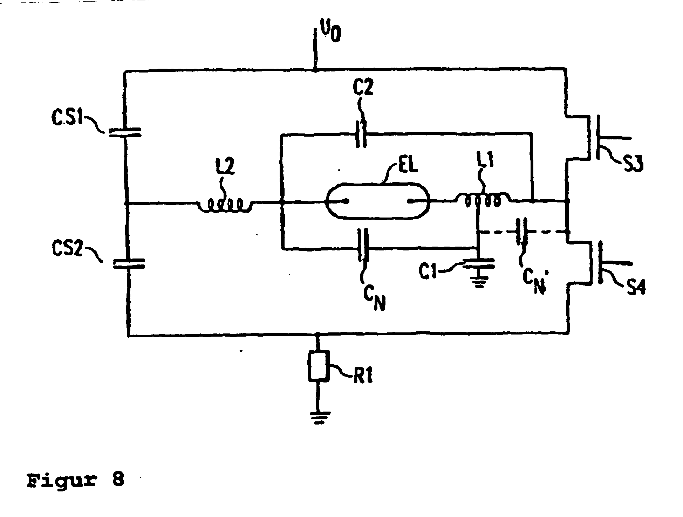

Da für die Resonanzzündung nur eine aktive Halbbrücke mit den Schaltern S3 und S4 benötigt wird, kann alternativ zu den gezeigten Schaltungen gemäß Fig. 1 und Fig. 7 auch eine Schaltung mit nur einer aktiven Halbbrücke (und somit mit aktiv angesteuerten Schaltern) und einer passiven Halbbrücke, gebildet durch zwei in Serie geschaltete Kondensatoren CS1 und CS2, die die Schalter S1 und S2 ersetzen, angewendet werden. Diese Ausführung ist entweder durch Ausnutzung der integrierten Freilaufdioden der Schalter S3 und S4 möglich, alternativ können aber zwei externe Freilaufdioden parallel zu den Schaltern S3 und S4 angeordnet sein. Die beiden Kondensatoren CS1 und CS2 können vorteilhafterweise die gleiche Kapazität besitzen. Eine mögliche Schaltungsvariante ist in der Fig. 8 dargestellt.

## Patentansprüche

1. Verfahren zum Zünden einer Gasentladungslampe,
die in einem Resonanzkreis im Brückenzweig einer Vollbrückenschaltung verschaltet ist, wobei die Vollbrückenschaltung wenigstens eine aktive Halbbrücken mit zwei in Serie geschalteten Schaltern aufweist,
wobei zum Zünden die wenigstens zwei in Serie geschaltete Schalter (S3, S4) komplementär hochfrequent getaktet werden,
wobei beim Zünden die beiden in Serie geschalteten Schalter in Form von voneinander zeitlich getrennten HF-Impulspaketen angesteuert werden, **dadurch gekennzeichnet, dass** sich beim Zünden Perioden mit HF-Impulspaketen mit Perioden abwechseln, während der die Schalter mit niedrigerer Frequenz betrieben werden, bis in einer der Perioden mit niedrigerer Schalterfrequenz eine Zündung der Lampe erfasst wird.

2. Verfahren nach Anspruch 1,
wobei die Frequenz der hochfrequenten Taktung der Schalter von HF-Impulspaket zu HF-Impulspaket abgesenkt wird.

3. Verfahren nach einem der vorhergehenden Ansprüche,
wobei die Frequenz innerhalb eines HF-Impulspaketes konstant ist.

4. Verfahren nach einem der vorhergehenden Ansprüche,
bei dem selektiv zwischen einem Zündbetrieb mit den HF-Impulspaketen und einer kontinuierlichen Resonanzanregung mit fallender Frequenz in Richtung der Resonanzfrequenz oder einer Harmonischen davon umgeschaltet werden kann.

5. Verfahren nach einem der vorhergehenden Ansprüche,
wobei die Vollbrückenschaltung zwei aktive Halbbrücken mit insgesamt vier Schaltern aufweist und beim Zünden die vier Schalter der beiden Halbbrücken getaktet werden.

6. Integrierte steuerschaltung, insbesondere ASIC, die zur Durchführung eines Verfahrens nach einem der vorhergehenden Ansprüche ausgelegt ist.

7. Schaltungsanordnung zum Zünden einer Gasentladungslampe, aufweisend eine mit DC-Spannung versorgte Vollbrückenschaltung, in deren Brückenzweig eine Resonanzkreis geschaltet ist und die Gasentladungslampe verschaltbar ist,
wobei Vollbrückenschaltung wenigstens eine aktive Halbbrücke mit zwei in Serie geschalteten Schaltern aufweist,
weiterhin aufweisend eine Steuereinheit (1), die im Zündbetrieb zwei in Serie geschaltete Schalter (S3, S4) der Vollbrückenschaltung komplementär hochfrequent taktet,
wobei die Steuerschaltung dazu ausgelegt ist, beim Zünden die beiden in Serie geschalteten Schalter in Form von voneinander zeitlich getrennten HF-Impulspaketen anzusteuern,
**dadurch gekennzeichnet dass**, die Steuereinheit dazu ausgelegt ist, die Schalter der Vollbrückenschaltung derart anzusteuern, dass sich Perioden mit HF-Impulspaketen mit Perioden abwechseln, während der die Schalter mit niedrigerer Frequenz betrieben werden, bis die Steuereinheit (1) in einer der Perioden mit niedrigerer Schalterfrequenz eine Zündung der Lampe erfasst wird.

8. Schaltungsanordnung nach Anspruch 7,
wobei die Steuerschaltung die Frequenz der hochfrequenten Taktung der Schalter von HF-Impulspaket zu HF-Impulspaket absenkt.

9. Schaltungsanordnung nach einem der Ansprüche 7 oder 8,
wobei die Steuerschaltung (1) die Frequenz innerhalb eines HF-Impulspaketes konstant hält.

10. Schaltungsanordnung nach einem der Ansprüche 7 bis 9,
bei dem die Steuereinheit umschaltbar ist zwischen einem Zündbetrieb mit den HF-Impulspaketen und einer kontinuierlichen Resonanzanregung mit fallender Frequenz in Richtung der Resonanzfrequenz oder einer Harmonischen davon.

11. Schaltungsanordnung nach einem der Ansprüche 7 bis 10,
wobei die Vollbrücke durch eine Halbbrücke mit zwei Schaltern (S3, S4) und die andere Halbbrücke durch zwei Kondensatoren (CS1, CS2) gebildet wird.

12. Vorschaltgerät für Hochdruck-Gasentladungslampen, aufweisend eine Schaltungsanordnung nach einem der Ansprüche 7 bis 11.

## Claims

1. Method for starting a gas discharge lamp, which is connected into a resonant circuit in the bridge branch of a full-bridge circuit, the full-bridge circuit having at least one active half bridge with two switches connected in series, the at least two switches (S3, S4) connected in series being clocked in complimentary fashion at high frequency for starting purposes, the two switches connected in series being driven in the form of HF pulse trains which are temporally separated from one another during starting, **characterized in that,** during starting, periods with HF pulse trains alternate with periods during which the switches are operated at a relatively low frequency until, in one of the periods at a relatively low switch frequency, starting of the lamp is detected.

2. Method according to Claim 1, the frequency of the high-frequency clocking of the switches being reduced from HF pulse train to HF pulse train.

3. Method according to one of the preceding claims, the frequency being constant within an HF pulse train.

4. Method according to one of the preceding claims, in which it is possible to switch over selectively between starting operation with the HF pulse trains and continuous resonance excitation at decreasing frequency in the direction of the resonant frequency or a harmonic thereof.

5. Method according to one of the preceding claims, the full-bridge circuit having two active half bridges with in total four switches and, during starting, the four switches of the two half bridges being clocked.

6. Integrated control circuit, in particular ASIC, which is designed for implementing a method according to one of the preceding claims.

7. Circuit arrangement for starting a gas discharge lamp, having a full-bridge circuit which is supplied with a DC voltage, wherein a resonant circuit is connected and the gas discharge lamp can be connected into the bridge branch of said full-bridge circuit, the full-bridge circuit having at least one active half bridge with two switches connected in series, furthermore having a control unit (1) which, during starting operation, clocks two switches (S3, S4) connected in series of the full-bridge circuit in complimentary fashion at high frequency, the control circuit being designed to drive the two switches connected in series in the form of HF pulse trains which are temporally separated from one another during starting, **characterized in that** the control unit is designed to drive the switches of the full-bridge circuit such that periods with HF pulse trains alternate with periods during which the switches are operated at a relatively low frequency until the control unit (1) detects starting of the lamp in one of the periods with a relatively low switch frequency.

8. Circuit arrangement according to Claim 7, the control circuit reducing the frequency of the high-frequency clocking of the switches from HF pulse train to HF pulse train.

9. Circuit arrangement according to either of Claims 7 and 8, the control circuit (1) keeping the frequency constant within an HF pulse train.

10. Circuit arrangement according to one of Claims 7 to 9, in which the control unit can be switched over between starting operation with the HF pulse trains and continuous resonance excitation at decreasing frequency in the direction of the resonant frequency or a harmonic thereof.

11. Circuit arrangement as claimed in one of Claims 7 to 10, the full bridge being formed by a half bridge with two switches (S3, S4) and the other half bridge is formed by two capacitors (CS1, CS2).

12. Ballast for high intensity gas discharge lamps, having a circuit arrangement as claimed in one of Claims 7 to 11.

## Revendications

1. Procédé pour allumer une lampe à décharge de gaz, qui est montée dans un circuit résonnant dans la branche de pont d'un circuit à pont complet, le circuit à pont complet présentant au moins un demi-pont actif avec deux commutateurs montés en série,
dans lequel pour l'allumage lesdits au moins deux commutateurs (S3, S4) montés en série sont cadencés à haute-fréquence de façon complémentaire,
dans lequel lors de l'allumage les deux commutateurs montés en série sont commandés sous la forme de paquets d'impulsions haute fréquence séparés temporellement entre eux,
**caractérisé en ce que** lors de l'allumage des périodes avec des paquets d'impulsions haute fréquence alternent avec des périodes pendant lesquelles les commutateurs sont actionnés avec une fréquence plus basse, jusqu'à ce qu'un allumage de la lampe est détecté dans une des périodes à fréquence de commutateur plus basse.

2. Procédé selon la revendication 1,
dans lequel la fréquence du cadencement à haute fréquence des commutateurs est abaissée de paquet d'impulsions haute fréquence en paquet d'impulsions haute fréquence.

3. Procédé selon l'une des revendications précédentes,
dans lequel la fréquence est constante au sein d'un paquet d'impulsions haute fréquence.

4. Procédé selon l'une des revendications précédentes,
dans lequel il est possible de commuter sélectivement entre une opération d'allumage avec les paquets d'impulsions haute fréquence et une excitation continue de résonance avec une fréquence en diminution vers la fréquence de résonance ou une de ses harmoniques.

5. Procédé selon l'une des revendications précédentes,
dans lequel le circuit à pont complet présente deux demi-ponts actifs avec un total de quatre commutateurs et lors de l'allumage les quatre commutateurs des deux demi-ponts sont cadencés.

6. Circuit de commande intégré, en particulier ASIC, conçu pour exécuter un procédé selon l'une des revendications précédentes.

7. Configuration de circuit pour allumer une lampe à décharge de gaz,
présentant un circuit à pont complet alimenté par une tension continue, un circuit résonnant étant connecté dans la branche de pont dudit circuit et la lampe à décharge de gaz pouvant y être connectée,
le circuit à pont complet présentant au moins un demi-pont actif avec deux commutateurs montés en série,
présentant en outre une unité de commande (1), qui, lors de l'opération d'allumage, cadence à haute-fréquence et de façon complémentaire deux commutateurs (S3, S4) montés en série du circuit à pont complet,
l'unité de commande étant conçue pour, lors de l'allumage, commander les deux commutateurs montés en série sous la forme de paquets d'impulsions haute fréquence séparés temporellement entre eux,
**caractérisée en ce que** l'unité de commande est conçue pour commander les commutateurs du circuit à pont complet de sorte que des périodes avec des paquets d'impulsions haute fréquence alternent avec des périodes pendant lesquelles les commutateurs sont actionnés avec une fréquence plus basse, jusqu'à ce que l'unité de commande (1) détecte un allumage de la lampe dans une des périodes à fréquence de commutateur plus basse.

8. Configuration de circuit selon la revendication 7,
dans laquelle l'unité de commande abaisse la fréquence du cadencement à haute fréquence des commutateurs de paquet d'impulsions haute fréquence en paquet d'impulsions haute fréquence.

9. Configuration de circuit selon l'une des revendications 7 ou 8,
dans laquelle l'unité de commande (1) maintient constante la fréquence au sein d'un paquet d'impulsions haute fréquence.

10. Configuration de circuit selon l'une des revendications 7 à 9,
dans laquelle l'unité de commande peut être commutée entre une opération d'allumage avec les paquets d'impulsions haute fréquence et une excitation continue de résonance avec une fréquence en diminution vers la fréquence de résonance ou une de ses harmoniques.

11. Configuration de circuit selon l'une des revendications 7 à 10,
dans laquelle le pont complet est composé d'un demi-pont avec deux commutateurs (S3, S4) et l'autre demi-pont est composé de deux condensateurs (CS1, CS2).

12. Ballast pour lampes à décharge de gaz à haute pression, présentant une configuration de circuit selon l'une des revendications 7 à 11.
